# NEUE EUROPÄISCHE PATENTSCHRIFT

(11) **EP 0 569 617 B2**
(45) Veröffentlichungstag und Bekanntmachung des Hinweises auf die Entscheidung über den Einspruch: **29.05.2002**
(45) Hinweis auf die Patenterteilung: 02.11.1995
(21) Anmeldenummer: 92113892.1
(22) Anmeldetag: 14.08.1992
(51) Int. Cl.: G01N 27/90, G01N 29/26, G01N 29/22

(54) **Verfahren und Einrichtung zum zerstörungsfreien Prüfen einer Durchführung eines Reaktordruckbehälter-Deckels**
Method and apparatus for non-destructive inspection of the pressure vessel cover of a nuclear reactor
Procédé et dispositif d'essai non-destructif du couvercle d'une cuve à pression de réacteur nucléaire

(30) Priorität: 13.05.1992 DE 4215700
(43) Veröffentlichungstag der Anmeldung: 18.11.1993
(73) Patentinhaber: ABB Reaktor GmbH, D-68167 Mannheim (DE)
(72) Erfinder: Haller, Hans, W-6800 Mannheim (DE); D'Annucci, Filippo, Dr., W-6800 Mannheim 31 (DE)
(74) Vertreter: Miller, Toivo

(56) Entgegenhaltungen:
- EP-A- 0 454 893
- DE-A- 2 944 315
- DE-A- 3 324 444
- DE-C2- 2 636 246
- FR-A- 2 296 848
- FR-A- 2 656 415
- GB-A- 2 012 959
- US-A- 4 167 121
- US-A- 4 355 536
- US-A- 5 036 707
- Seite 7 der Firmenschrift der Siemens AG, "Druckwasserreaktor", Erlangen 1991
- "Meeting the upper-vessel-head challenge with eddy currents and UT", Nuclear Engineering International, Vol. 38, No. 462, Januar 1993, Seiten 38-41
- "Reaktor Druckbehaelterdeckelstutzen-Inspektion", Referenzliste der ABB Reaktor GmbH, S.1 von 3
- "Reaktor Druckbehaelterdeckelstutzen: Systemlieferung/Studien", Referenzliste der ABB Reaktor GmbH, S. 1 von 1
- Offre Technique Framatome - EDF vom 17/3/92

## Beschreibung

Die Erfindung betrifft ein Verfahren und eine Einrichtung zum zerstörungsfreien Prüfen einer als eingeschweißter Stutzen ausgebildeten Durchführung eines auf einem Abstellring abgesetzten Reaktordruckbehälter-Deckels, wobei der Stutzen von einer an ihm abgestützten Hülse unter Belassung eines Ringspaltes durchsetzt ist und wobei das untere Ende der Hülse weiter in den Raum des Reaktordruckbehälter-Deckels ragt als der Stutzen und wobei eine mit einem Wirbelstromprüfkopf bestückte Sonde in den Ringspalt eingebracht und darin verfahren wird.

In einem Angebot vom 17. März 1992 der Firma Framatome an die Kraftwerksbetreiberfirma EdF ist ein Werkzeugträger für eine Sonde zum Prüfen von Deckeldurchführungen der oberbegrifflichen Art beschrieben. Mit Hilfe einer Halteplatte des Werkzeugträgers soll es möglich sein, daß die Sonde auf der Innenseite der Durchführung zwei Arten von Bahnen beschreiben kann. Zum einen eine Abtastung bei Fahrt in Längsrichtung mit Inkrementierung bei Rotation und zum anderen eine Abtastung bei Rotation 0/370° mit vertikaler Inkrementierung. Die am Arm eines Manipulators angelenkte Halteplatte trägt zwei Flanscheinrichtungen, mit denen das Werkzeug an der Hülse und an der Durchführung angeflanscht wird. Eine Flanscheinrichtung dient offenbar zum Anheben der Hülse um ca. 10 mm und zum Verschieben derselben seitlich gegen die Durchführung. Durch die seitliche Verschiebung der Hülse wird über einen Teilbereich des Spaltes zwischen Hülse und Durchführung die Spaltbreite vergrößert. Ist der zugängliche Bereich durch vertikale Fahrbewegungen abgefahren, muß die Hülse in eine andere Richtung seitlich verfahren werden, um andere Teilbereiche des Spaltes prüfen zu können. Die Methode der seitlichen Verschiebung der Hülse erfordert einen zusätzlichen Aufwand an Mechanik und Steuerung und verhindert den Einsatz einer rotierenden Sondenbewegung. Auch die zweifach vorgesehenen Flanscheinrichtungen erfordern einen aufwendigen Aufbau.

Nach der DE 26 36 246 C2 werden bei einem auf einem Abstellring abgesetzten Reaktordruckbehälter-Deckel die Stege zwischen den Stutzen mit einem Ultraschallprüfkopf auf Anrisse untersucht. Die Prüfung der Stutzen selbst, die unter Belassung eines Ringspaltes von einer Hülse durchsetzt sind, ist dort nicht vorgesehen.

Es stellt sich die Aufgabe, ein Verfahren und eine Einrichtung zur zerstörungsfreien Prüfung der Reaktordruckbehälter-Durchführungen anzugeben, das bzw. die bei eingebauten Hülsen durchführbar bzw. einsetzbar ist und bei einfachem Aufbau ohne ein seitliches Verschrieben der Hülse auskommt.

Gelöst wird diese Aufgabe durch ein Verfahren gemäß den Ansprüchen 1 und 4 sowie durch eine Einrichtung nach Anspruch 5. Gemäß der Ausbildung des Verfahrens nach Anspruch 1 wird vorgesehen, daß ein Zentrierstück mit dem unteren Ende der Hülse in Kontakt gebracht wird, und daß die Sonde zusammen mit dem Zentrierstück und der Hülse in eine Rotationsbewegung versetzt wird.

Das Zentrierstück dient dabei als Mitnehmer für die Hülse, so daß die Hülse die Rotationsbewegung der Sonde in keiner Phase behindern kann.

Vorzugsweise ist die Rotationsbewegung eine Pendelbewegung, an deren Beginn oder Ende eine Vertikalbewegung der Sonde in eine neue Prüfposition erfolgt.

Dabei wird der Ringspalt in fortlaufenden ringförmigen Schritten abgefahren.

Erfolgt während der Rotationsbewegung eine konstante Verstellbewegung der Sonde, so wird der Ringspalt mäanderartig durchfahren.

Wird während einer Probedrehung des Drehtellers bei bereits angelegtem Zentrierstück aber noch nicht in den Ringspalt eingefahrene Sonde festgestellt, daß wegen nicht nachvollziehbaren Gründen ein Durchdrehen des Zentrierstückes und damit keine Mitnahme der Hülse erfolgt, wird gemäß dem Verfahren nach Anspruch 4 vorgeschlagen, daß ein Zentrierstück mit dem unteren Ende der Hülse in Kontakt gebracht wird, daß bei in Ruhestellung bleibender Hülse der Ringspalt streifenförmig in vertikaler Richtung vom Wirbeistromprüfkopf bestrichen wird, und daß nach dem Bestreichen eines Streifens der Wirbelstromprüfkopf durch Verdrehen der Sonde in eine neue Prüfposition zum Bestreichen eines weiteren Streifens gebracht wird.

Der vorhandene Kontakt mit dem Zentrierstück stellt sicher, daß das streifenförmige Abfahren störungsfreie Prüfergebnisse liefert

Eine Einrichtung zum Prüfen der Reaktordruckbehälter-Deckel-Durchführungen bei eingebauten Hülsen sieht vor, daß ein im Abstellring angeordneter Manipulator einen Rahmen aufweist, der über feststellbare Schwimmlager ein Gehäuse zur Aufnahme eines Drehtellers trägt, daß dem Drehteller in exzentrischer Anordnung ein vertikal verstellbarer Hubzylinder zugeordnet ist, der die Drehbewegung des Drehtellers mit ausführt und an seinem freien Ende einen Sondenantrieb zur Bewegung der Sonde in achsparalleler Richtung zum Stutzen trägt.

Eine bevorzugte Ausgestaltung sieht vor, daß dem Drehteller konzentrisch ein in vertikaler Richtung verstellbares Zentrierstück zugeordnet ist, das die Drehbewegung des Drehtellers mit ausführt.

Während mit dem Manipulator alle die vom Rahmen getragenen Einrichtungsteile in eine erste Position gebracht werden, gelangt das Zentrierstück mit einer vertikalen Feinverstellung unter Einhaltung einer vorbestimmten Anpreßkraft in Kontakt mit der Hülse. Unter Aufrechterhaltung der vorgebenen Anpreßkraft wird nun eine Drehung des Drehtellers um bis zu 370° durchgeführt. Erfolgt dabei eine Mitnahme der Hülse durch das Zentrierstück, so wird das Prüfverfahren nach Anspruch 1 eingesetzt. Erfolgt keine Mitnahme, so wird das Prüfverfahren nach Anspruch 4 eingesetzt.

Die Sonde besteht aus einem Federstahlband, das mit einer Perforierung versehen ist und an seinem freien Ende den Wirbeistromprüfkopf trägt, wobei ein Noppenrad des Sondenantriebs in die Perforierung eingreift.

Die Sonde vereint damit auf einfache Weise die Forderung nach Flexibilität für die vertikale Bewegung und die Forderung nach Steifigkeit für die Rotationsbewegung.

Gemäß einer bevorzugten Ausgestaltung ist vorgesehen, daß der Hubzylinder ein waagrecht erstrecktes Fußstück aufweist, an dem schwenkbar ein Gabelstück und eine Halterung für einen Pneumatikzylinder angelenkt sind, wobei die Kolbenstange des Pneumatikzylinders mit dem Gabelstück verbunden ist und wobei an einen plattenförmig ausgebildeten Ende des Gabelstückes ein Klemmhalter zur Aufnahme des Sondenantriebs befestigt ist.

Die dadurch erzielte Schwenkbarkeit des Sondenantriebes erleichert das Anfahren des Ringspaltes erheblich.

Zur Erzielung eines Anlaufschutzes, der die Sonde vor eine Beschädigung schützen soll, wird gemäß einer weiteren Ausgestaltung vorgeschlagen, daß an der Befestigungsstelle des Klemmhalters ein federnd abgestützter Spalt vorgesehen ist, und daß dem Klemmhalter des Sondenantriebs ein Anschlag und dem Gabelstück ein Endschalterhalter zugeordnet sind, die bei Unterschreiten einer vorgebbaren Spaltbreite eine Unterbrechung der Vertikalbewegung der Sonde bewirken.

Das Federstahlband weist vorzugsweise eine Vielzahl von in Reihe angeordneten Langlöchern auf, wobei die Verbindungsstege zwischen den Langlöchern in gegenläufiger Richtung als halbkreisförmige Sicken zur Führung einer Übertragungsleitung des Wirbelstromprüfkopfes ausgebildet sind.

Damit führt die platzsparende Unterbringung der Übertragungsleitungen zu keiner Schwächung des Federstahlbandes.

Nach einer anderen Ausgestaltung ist vorgesehen, daß die Sonde aus einem Federstahl band besteht, das mit einer Perforierung versehen ist, und daß am freien Ende der Sonde ein der Krümmung des Ringspaltes entsprechender Querträger befestigt ist, der an seinen freien Enden je einen Wirbelstromprüfkopf aufnimmt.

Anhand verschiedener Ausführungsbeispiele wird ein Verfahren und eine Einrichtung zur Prüfung der Durchführung eines Reaktordruckbehälter-Deckels beschrieben.

Dabei zeigt die
- Fig. 1: einen Längsschnitt durch einen Reaktordruckbehälter-Deckel mit einer schematisch angedeuteten Prüfeinrichtung,
- Fig. 1a: einen Stutzen mit einer daran abgestützten Hülse,
- Fig. 2: eine Teilansicht einer Durchführung mit der Prüfeinrichtung,
- Fig. 2a: einen Teilbereich der Fig. 2 in einem größeren Maßstab,
- Fig. 3: eine Ansicht in Pfeilrichtung III der Fig. 2 unter Weglassung der Durchführung,
- Fig. 4: eine schematische Perspektivdarstellung der Einrichtung nach Fig. 2 und 3,
- Fig. 5: einen Sondenantrieb mit seinen Verbindungselementen zu einem Hubzylinder,
- Fig. 6: einen Schnitt entlang der Linie VI-VI der Fig. 5,
- Fig. 7: einen Teilbereich einer Sonde,
- Fig. 8: einen Teilbereich einer Sonde in einem größeren Maßstab,
- Fig. 9: eine Querschnitt entlang der Linie IX-IX der Fig. 8 und
- Fig. 10: eine perspektivische Darstellung einer anderen Sondenausbildung.

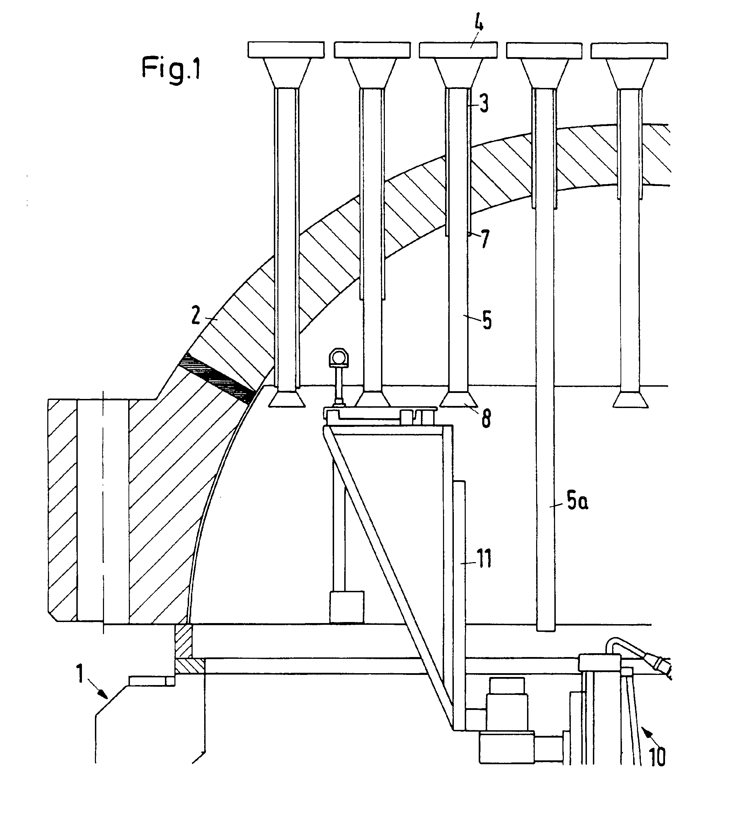

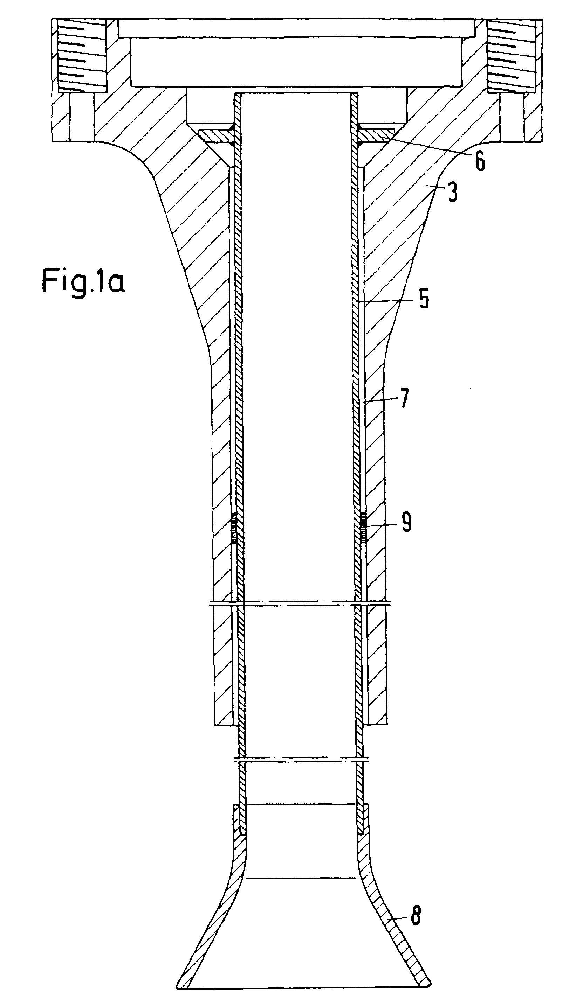

Die Figur 1 zeigt einen auf einem Abstellring 1 abgesetzten Reaktordruckbehälter-Deckel 2. Der Reaktordruckbehälter-Deckel weist eine Vielzahl von als rohrförmige Stutzen 3 ausgebildete Durchführungen für nicht dargestellte Regelstäbe auf. Die Stutzen sind im Deckel 2 eingeschweißt und laufen an ihren außerhalb des Deckels befindlichen Enden konisch auseinander und gehen in einen Flansch 4 zum Anbringen nicht dargestelllter Komponenten über. Der jeweilige Stutzen 3 wird von einer Hülse 5, 5a durchsetzt. Wie aus der Fig. 1a besser ersichtlich ist, ist die Hülse 5 über einen Bund 6 am Stutzen 3 abgestützt und bildet mit diesem einen Ringspalt 7 von ca. 3mm Breite. Je nach Lage des Stutzens ragt das dem Deckelinnenraum zugewandte Ende der Hülse 5 ein mehr oder weniger großes Stück weiter in den Innenraum des Deckels 2 als der Stutzen 3. Das aus dem Stutzen herausragende Hülsenende ist bei der Hülse 5 als glockenförmige Erweiterung 8 ausgebildet. Eine solche glockenförmige Erweiterung kann auch fehlen, wie das weiter in den Innenraum des Deckels 2 ragende Ende der Hülse 5a zeigt. Die Durchführung mit der Hülse 5a ist im übrigen genauso ausgeführt wie in Fig. 1a hinsichtlich der Hülse 5 gezeigt. Im Bereich des Stutzens 3 ist die Hülse 5, 5a mit Führungsnoppen 9 versehen. Ein im Innenraum des Abstellringes 1 bzw. des Deckels 2 angeordneter Manipulator 10 trägt einen Rahmen 11, auf dem die in den nachfolgenden Figuren beschriebene Einrichtung zum Prüfen der Stutzen im Bereich des Ringspaltes ruht. Der Manipulator 10 bringt den Rahmen mit den Einrichtungsteilen in eine Basisposition, von der aus die anderen Bauteile der Einrichtung durch eigene Antriebsbewegungen in die Prüfposition gelangen.

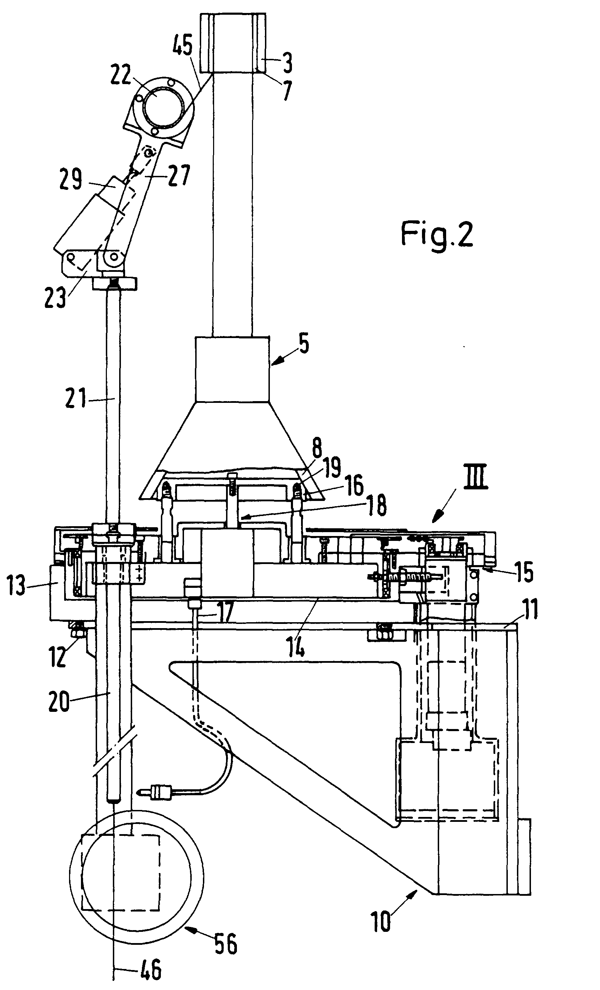

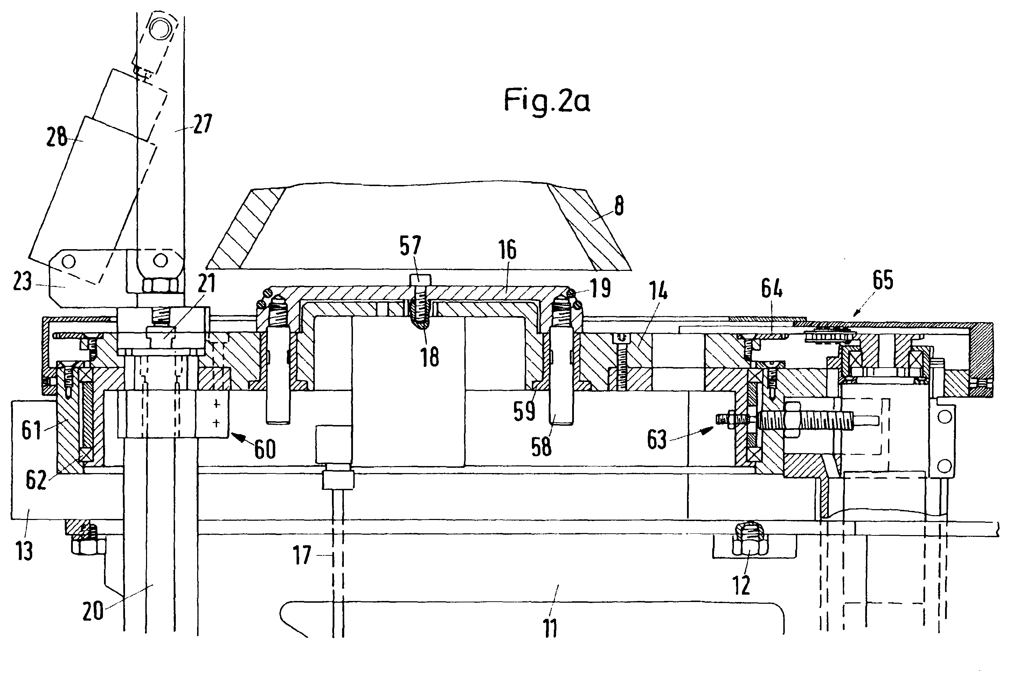

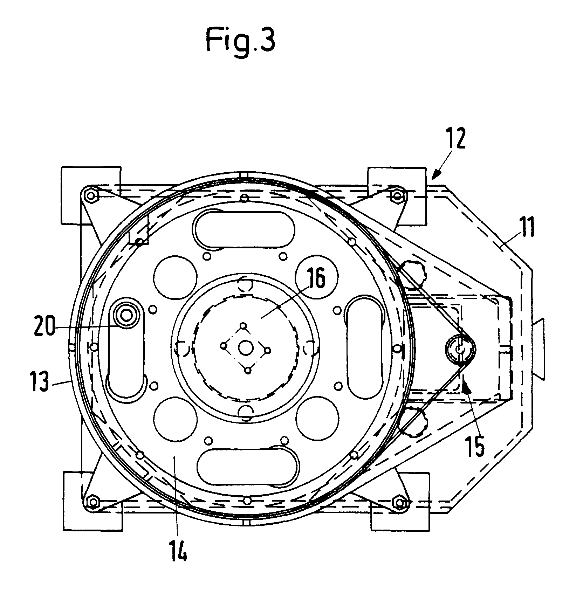

Die Fig. 2 und 3 zeigen den Rahmen 11, der über vier Schwimmlager 12 ein Gehäuse 13 zur Aufnahme eines Drehtellers 14 trägt. Die Schwimmlager erlauben eine Pendelbewegung bis zu einem Ausschlag von ca. 5mm. Der umfangsseitig als Kettenrad ausgebildete Drehteller wird über eine dem Gehäuse 13 zugeordnete Antriebseinheit 15 in Drehung versetzt. In seinem Zentrum weist der Drehteller 14 ein vertikal verstellbares Zentrierstück 16 auf. Dabei ist über einen Pneumatikanschluß 17 ein mit dem Zentrierstück verschraubter Träger 18 vertikal bewegbar, so daß das Zentrierstück 16 mit einer vorgebbaren Kraft die Innenumfangsfläche der glockenförmigen Erweiterung 8 kontaktet. Der Kontakt wird über einen dem Zentrierstück zugeordneten O-Ring 19 sichergestellt. Die Anpreßkraft ist so eingestellt, daß die Hülse geringfügig von der Auflagefläche des Bundes 6 abgehoben ist und das Gewicht der Hülse nunmehr auf dem Zentrierstück 16 ruht. Der Träger 18 und das Zentrierstück 16 können entfernt werden, so daß sie eine Öffnung freigeben, deren lichte Weite größer ist als der Durchmesser der Hülse 5a.

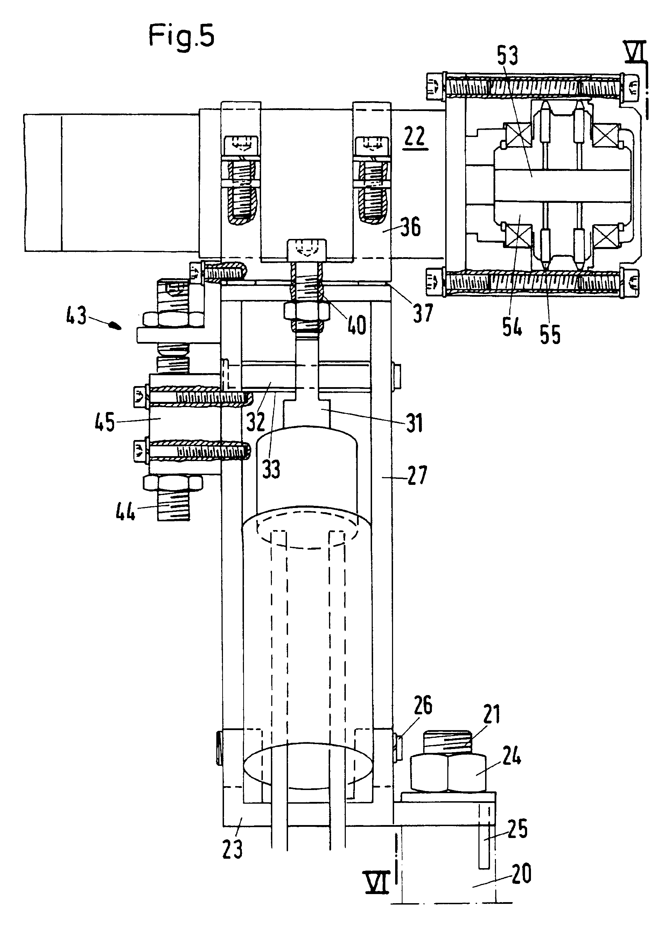

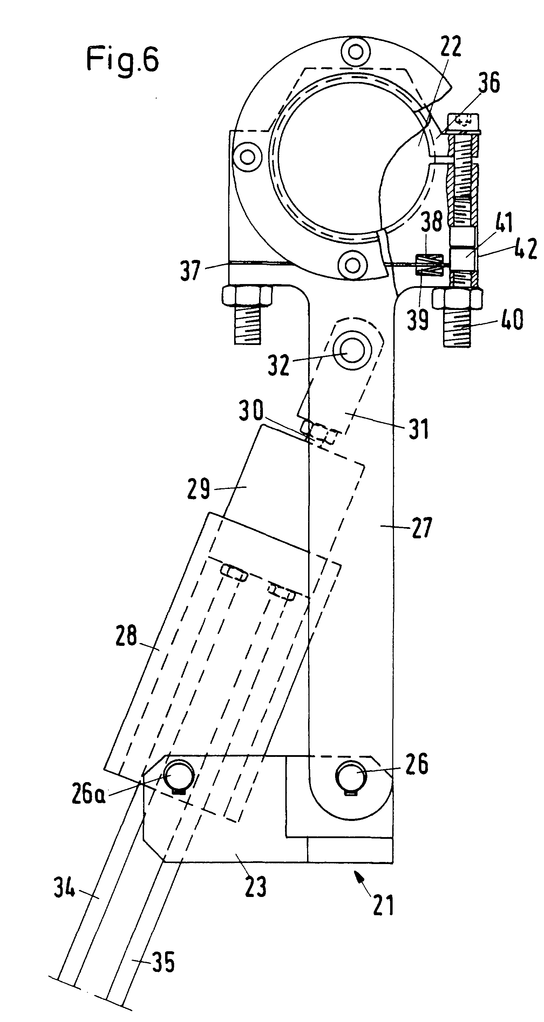

In exzentrischer Anordnung (Fig. 2 und 3) durchsetzt den Drehteller 14 ein elektromechanischer Hubzylinder 20, an dessen Kolbenstange 21 ein Sondenantrieb 22 angelenkt ist. Der mit einer Antriebseinheit 56 ausgestattete Hubzylinder 20 ist am Drehteller 14 befestigt und führt dessen Rotationsbewegung ebenso wie das Zentrierstück 16 mit aus. Gemäß Fig. 5 und 6 ist ein waagrecht erstrecktes Fußstück 23 mit einer Mutter 24 an der Kolbenstange 21 verschraubt und über einen Stift 25 gegen Verdrehen gesichert. Über eine Bolzenverbindung 26 ist ein Gabelstück 27 schwenkbar an dem Fußstück 23 angelenkt. Auf gleiche Weise ist über einen parallel zur Bolzenverbindung 26 verlaufenden Steckbolzen 26a eine Halterung 28 für einen Pneumatikzylinder 29 mit dem Fußstück verbunden. Ein mit einer Kolbenstange 30 des Pneumatikzylinders 29 verschraubtes Gabelgelenk 31 stellt die Verbindung zu einem den oberen Bereich des Gabelstückes 27 durchsetzenden Bolzen 32 dar. Das Gabelgelenk 31 ist über Distanzhülsen 33 in seiner Position gehalten. Die beschriebene Dreipunktverbindung erlaubt beim Betätigen des Pneumatikzylinders 29 über die Versorungsleitungen 34, 35 eine vorgebbare Schwenkbewegung des Gabelstückes 27. Am plattenförmig ausgebildeten Ende des Gabelstückes ist ein Klemmhalter 36 zur Aufnahme des eigentlichen Sondenantriebes 22 unter Belassung eines von 0,5 bis 3 mm variierbaren Spaltes 37 befestigt. Über mehrere Federn 38, die jeweils in Vertiefungen 39 eingelassen sind, ist der Spalt 37 federnd ausgebildet. Die maximale Spaltbreite ist einstellbar durch eine Schraubverbindung 40. Mindestens zwei im plattenförmig ausgebildeten Ende des Gabelstückes eingeschraubte Stehbolzen 41 gewährleisten in Verbindung mit im Klemmhalter 36 angeordneten Büchsen 42 eine gleitende Führung des Klemmhalters bei einer Änderung der Spaltbreite. Die angefederte Ausbildung der Halterung für den Sondenantrieb bildet einen Anlaufschutz für die Sonde. Dazu ist dem Klemmhalter 36 ein verstellbarer Anschlag 43 zugeordnet, der nach dem Unterschreiten einervorgebbaren Spaltbreite einen Endschalter 44 eines am Gabelstück 27 befestigten Endschalterhalters 45 auslöst und die Vertikalbewegung der Sonde unterbricht.

Die Figur 2a zeigt in einem größeren Maßstab einen Teilbereich der Figur 2. Das mit einer Schraube 57 am Träger 18 befestigte Zentrierstück 16 ist in seine untere Position gefahren, wobei die dem Zentrierstück zugeordneten Stifte 58 in Büchsen 59 des Drehtellers 14 geführt sind. Auch die Kolbenstange 21 des am Drehteller 14 mit Hilfe einer Spanneinrichtung 60 befestigten elektromechanischen Hubzylinders 20 befindet sich in der unteren Position. Dem über die Schwimmlager 12 auf dem Rahmen 11 abgestützten Gehäuse 13 ist ein Lagerring 61 zugeordnet, relativ zu dem unter Zwischenschaltung eines Kugellagers 62 der Drehteller 14 eine pendelnde Drehbewegung bis zu 370° ausführen kann. Über eine Endschalteranordnung 63 ist die Drehbewegung begrenzbar. Eine Kettenradscheibe 64 ist mit dem Drehteller 14 verschraubt, so daß über die dem Gehäuse 13 zugeordnete Antriebseinheit 15 der Drehteller 14 zusammen mit dem Zentrierstück 16 und dem Hubzylinder 20 in Drehung versetzt wird. Ein am Lagerring 61 befestigter Kettenschutz 65 überprüft den Kettentrieb.

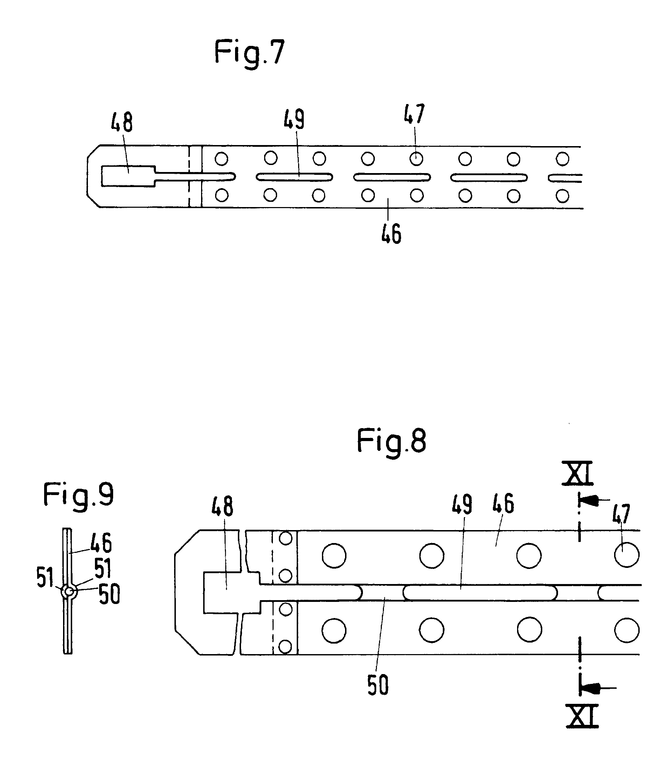

Die in den Fig. 7 bis 9 dargestellte Sonde 46 besteht aus einem Federstahlband, das eine Vielzahl von Perforierungen 47 aufweist. An seinem dem zu prüfenden Ringspalt 7 zugewandten Ende trägt die Sonde einen Wirbelstromprüfkopf 48. Das Federstahlband ist mit einer Vielzahl von in Reihe angeordneten Langlöchern 49 versehen, wobei die verbleibenden Verbindungsstege zwischen den Langlöchern in gegenläufigen Richtungen als halbkreisförmige Sicken 51 ausgebildet sind, die zur Führung einer Übertragungsleitung 50 des Wiurbelstromprüfkopfes 48 dienen. Die Sicken tragen zur Versteifung der Sonde bei, ohne daß sie deren erforderliche Flexibilität behindern. Der den Wirbelstromprüfkopf 48 tragende Teilbereich der Sonde besteht zur Vermeidung von Meßfehlern aus nichtrostendem Stahl der Werkstoffnummer 1.4301, der mittels Punktschweißung 52 auf dem Federstahlband aufgesetzt ist. Zur Verwirklichung des vertikalen Transportes dieser Sonde ist der Abtriebswelle 53 des Sondenantriebes 22 ein Noppenrad 54 zugeordnet, dessen auf dem Umfang verteilte Noppen 55 in die Perforierung 47 der Sonde 46 eingreifen. Oberhalb des Sondenantriebs ist in der Fig. 2 die in den Fig. 5 und 6 beschriebene Schwenkbarkeit des Gabelstückes angedeutet, durch die die Sonde ebenfalls eine Schwenkbewegung ausführt.

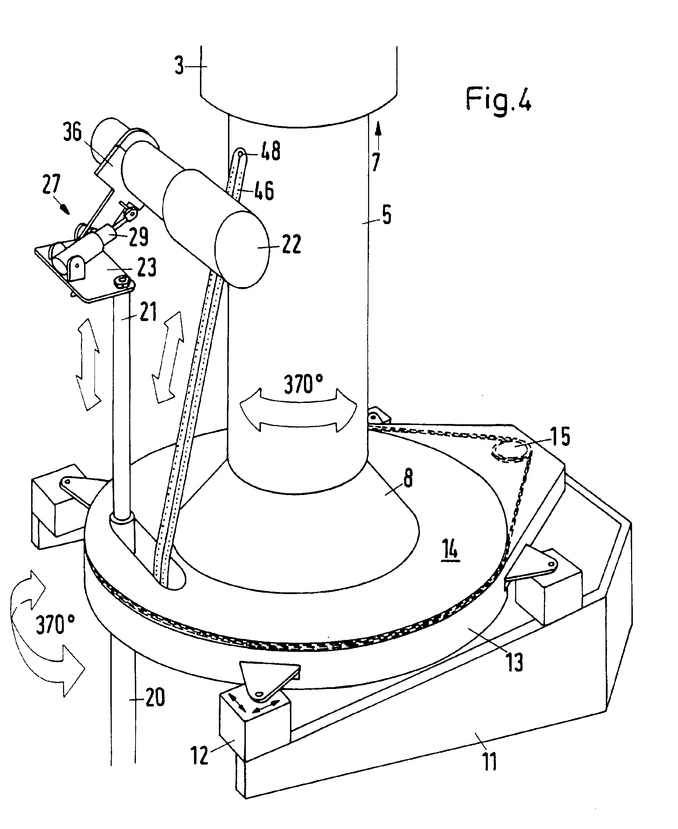

Die Durchführung der Prüfung wird nachfolgend unter Einbeziehung der perspektivischen Übersichtszeichnungen nach der Fig. 4 erläutert. Nachdem die auf dem Rahmen 11 ruhende Prüfeinrichtung mit Hilfe des Manipulators in die Nähe einer zu prüfenden Reaktordruckbehälter-Deckel-Durchführung gebrachtworden ist, wird das Zentrierstück 16 mit Hilfe des pneumatisch verfahrbaren Trägers 18 mit einer vorgebbaren Kraft die Innenumfangsfläche der glockenförmigen Erweiterung 8 der Hülse 5 kontakten. Danach erfolgt das Positionieren der Sondenspitze vor dem Ringspalt 7 sowohl durch vertikales Verfahren der Sonde mit Hilfe des Hubzylinders und des Sondenantriebs als auch durch Schwenken des Gabelstückes 27. Eine Probedrehung des Drehtellers 14 um ca, 360° schafft Klarheit darüber, ob bei der Drehung das als Mitnehmer wirkende Zentrierstück 16 die Hülse mitdreht oder nicht. Ist ein Mitdrehen der Hülse erfolgt, wird die Sonde in den Ringspalt 7 eingefahren und in eine erste Prüfposition gebracht. Jetzt erfolgt eine Drehung des Drehtellers um ca. 370°, wodurch ein von der Breite des Wirbelstromprüfkopfes abhängiger ringförmiger Bereich der Mantelfläche des Stutzens 3 geprüft ist. Die Sonde wird jetzt mit dem Sondenantrieb vertikal in die nächste Prüfposition verfahren. Durch Drehen des Drehtellers um 370° in entgegengesetzter Richtung wird wiederum ein ringförmiger Bereich geprüft. Dieses Verfahren - vertikales Verfahren + Pendelbewegung - wird fortgeführt, bis der gesamte Ringspalt abgefahren ist. Da die Hülse 5 die Drehbewegung des Drehtellers mit ausführt, stören die auf dem Außenumfang der Hülse angeordneten Führungsnoppen 9 die pendelnde Bewegung der Sonde nicht. Durch kontinuierliche Vertikalbewegung während der Rotationsbewegung wird der zu prüfende Ringspalt mäanderartig abgefahren.

Stellt sich bei der Probedrehung des Zentrierstückes 16 jedoch heraus, daß wegen Verschmutzung oder sonstiger Einflüsse zwischen Hülse 5 und Stutzen 3 keine Mitnahme der Hülse 5 erfolgt, wird der Ringraum durch vertikale Bewegung der Sonde streifenförmig abgefahren. Nach dem Abfahren eines Streifens wird durch Verdrehen des Drehtellers die nächste Prüfposition angefahren. Ein durch einen Führungsnoppen 9 belegter Streifen kann dabei nur unterhalb der Noppen 9 geprüft werden. Beim Auffinden der Führungsnoppen leistet die Anlaufsicherung im Bereich der Anfederung zwischen Gabelstück 27 und Klemmhalter 36 hilfreiche Unterstützung.

Soll der Ringspalt im Bereich der verhältnismäßig lang ausgeführten Hülse 5a (Fig. 1) geprüft werden, so werden die Träger 18 und das Zentrierstück 16 entfernt. Beim Hochfahren der Einrichtung mit dem Manipulator 10 durchsetzt die Hülse 5a den Drehteller 14, so daß die Einrichtung bis auf die Höhe der unteren Enden der Hülsen 5 gebracht werden kann. Von hier aus kann die Sonde in üblicher Weise in den Ringspalt eingefahren werden. Wegen der Baulänge der Hülse 5a ist die Verwendung des Zentrierstückes 16 nicht möglich. Erfoderlichenfalls können umfangsseitig an der Hülse 5a angreifende Führungsmittel die Aufgabe des Zentrierstücks übernehmen.

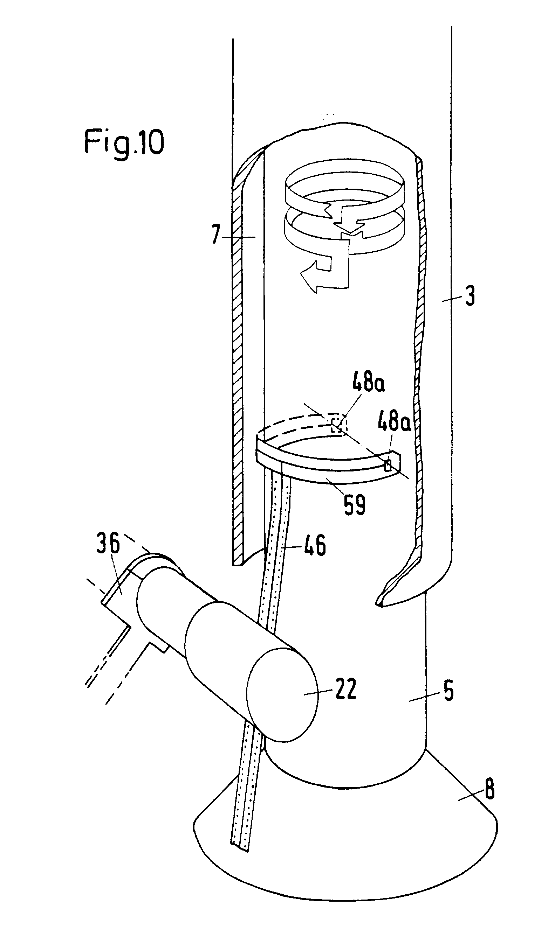

Nach der Fig. 10 ist am freien Ende der Sonde ein der Krümmung des Ringspaltes 7 entsprechender Querträger 59 befestigt, der an seinen freien Enden je einen Wirbelstromprüfkopf 48a trägt. Damit läßt sich ebenfalls nach dem am oberen Ende der Fig. 10 dargestellten Pendelverfahren mit vertikaler Einstellung einer neuen Prüfposition arbeiten. Damit lassen sich ferner bei nichtmitdrehbarer Hülse 5 die Führungsnoppen 9 besser umfahren.

## Patentansprüche

1. Verfahren zum zerstörungsfreien Prüfen einer als eingeschweißter Stutzen (3) ausgebildeten Durchführung eines auf einem Abstellring (1) abgesetzten Reaktordruckbehälter-Deckels (2), wobei der Stutzen (3) von einer an ihm abgestützten Hülse (5) unter Belassung eines Ringspaltes (7) durchsetzt ist, wobei das untere Ende der Hülse weiter in den Innenraum des Reaktordruckbehälter-Deckels ragt, als der Stutzen, und wobei eine mit einem Wirbelstromprüfkopf (48) bestückte Sonde (46) in den Ringspalt (7) eingebracht und darin verfahren wird,
**dadurch gekennzeichnet, daß** ein Zentrierstück (16) mit dem unteren Ende der Hülse (5) in Kontakt gebracht wird und daß die Sonde (46) zusammen mit dem Zentrierstück und der Hülse in eine Rotationsbewegung versetzt wird.

2. Verfahren nach Anspruch 1, **dadurch gekennzeichnet, daß** die Rotationsbewegung eine Pendelbewegung ist, an deren Beginn oder Ende eine Vertikalbewegung der Sonde (46) in eine neue Prüfposition erfolgt.

3. Verfahren nach Anspruch 1 oder 2 **dadurch gekennzeichnet, daß** während der Rotationsbewegung eine kontinuierliche Vertikalbewegung der Sonde (46) erfolgt.

4. Verfahren zum zerstörungsfreien Prüfen einer als eingeschweißter Stutzen (3) ausgebildeten Durchführung eines auf einem Abstellring (1) abgesetzten Reaktordruckbehälter-Deckels (2), wobei der Stutzen (3) von einer an ihm abgestützten Hülse (5) unter Belassung eines Ringspaltes (7) durchsetzt ist, wobei das untere Ende der Hülse weiter in den Innenraum des Reaktordruckbehälter-Deckels ragt, als der Stutzen, und wobei eine mit einem Wirbelstromprüfkopf (48) bestückte Sonde (46) in den Ringspalt (7) eingebracht und darin verfahren wird.
**dadurch gekennzeichnet, daß** ein Zentrierstück (16) mit dem unteren Ende der Hülse (5) in Kontakt gebracht wird, daß bei in Ruhestellung bleibender Hülse (5) der Ringspalt (7) streifenförmig in vertikaler Richtung vom Wirbelstromprüfkopf (48) bestrichen wird, und daß nach dem Bestreichen eines Streifens der Wirbelstromprüfkopf durch Verdrehen der Sonde (46) in eine neue Prüfposition zum Bestreichen eines weiteren Streifens gebracht wird.

5. Einrichtung zum zerstörungsfreien Prüfen einer als eingeschweißter Stutzen (3) ausgebildeten Durchführung eines auf einem Abstellring (1) abgesetzten Reaktordruckbehälter-Deckels (2), wobei der Stutzen (3) von einer an ihm abgestützen Hülse (5) unter Belassung eines Ringspaltes (7) durchsetzt ist und wobei das untere Ende der Hülse weiter in den Innenraum des Reaktordruckbehälter-Deckels ragt als der Stutzen und wobei eine mit einem Wirbelstromprüfkopf (48) bestückte Sonde (46) in den Ringspalt (7) einbringbar und verfahrbar ist, **dadurch gekennzeichnet, daß** auf einem innerhalb des Abstellrings (1) angeordneten Manipulator (10) ein Rahmen (11) abgestützt ist, der über feststellbare Schwimmlager (12) ein Gehäuse (13) zur Aufnahme eines Drehtellers (14) trägt, daß dem Drehteller in exzentrischer Anordnung ein vertikal verstellbarer Hubzylinder (20) zugeordnet ist, der die Drehbewegung des Drehtellers mit ausführt und an seinem freien Ende einen Sondenantrieb (22) zur Bewegung der Sonde (46) in achsparalleler Richtung zum Stutzen (3) trägt, und daß dem Drehteller (14) konzentrisch ein in vertikaler Richtung verstellbares Zentrierstück (16) zugeordnet ist, das die Drehbewegung des Drehtellers mit ausführt.

6. Einrichtung nach Anspruch 5, **dadurch gekennzeichnet, daß** die Sonde (46) aus einem Federstahlband besteht, das mit einer Perforierung (47) versehen ist und an seinem freien Ende den Wirbelstromprüfkopf (48) trägt, wobei ein Noppenrad (54) des Sondenantriebes (22) in die Perforierung (47) eingreift.

7. Einrichtung nach Anspruch 5, **dadurch gekennzeichnet, daß** der Hubzylinder (20) ein waagrecht erstrecktes Fußstück (23) aufweist, an dem schwenkbar ein Gabelstück (27) und eine Halterung (28) für einen druckmittelgesteuerten Zylinder (29) angelenkt sind, wobei die Kolbenstange (30) des Zylinders mit dem Gabelstück (27) verbunden ist und wobei an einem plattenförmig ausgebildeten Ende des Gabelstückes ein Klemmhalter (36) zur Aufnahme des Sondenantriebes (22) befestigt ist.

8. Einrichtung nach Anspruch 7, **dadurch gekennzeichnet, daß** an der Befestigungsstelle des Klemmhalters (36) ein federnd abgestützter Spalt (37) vorgesehen ist, und daß dem Klemmhalter (36) des Sondenantriebs (22) ein Anschlag (43) und dem Gabelstück (27) ein Endschalterhalter (45) zugeordnet sind, die bei Unterschreiten einer vorgebbaren Spaltbreite eine Unterbrechung der Vertikalbewegung der Sonde (46) bewirken.

9. Einrichtung nach Anspruch 5, **dadurch gekennzeichnet, daß** die Sonde (46) aus einem Federstahlband besteht, das mit einer Perforierung (47) versehen ist, und daß am freien Ende der Sonde (46) eine der Krümmung des Ringspaltes (7) entsprechender Querträger (59) befestigt ist, der an seinen freien Enden je winen Wirbelstromprüfkopft (48a) aufnimmt.

10. Einrichtung nach Anspruch 6 oder 9, **dadurch gekennzeichnet, daß** das Federstahlband mit einer Vielzahl von in Reihe angeordneten Langlöchern (49) versehen ist, daß die Verbindungsstege zwischen den Langlöchern in gegenläufiger Richtung als im Querschnitt halbkreisförmige Sicken (51) zur Führung einer Übertragungsleitung (50) des Wirbelstromprüfkopfes (48) ausgebildet sind.

## Claims

1. A method for non-destructive testing of a lead-through arranged as a welded connection piece (3) of the lid (2) of a reactor pressure vessel which is placed on a parking ring (1), with the connection piece (3) being penetrated by a sleeve (5) resting on the same whilst leaving an annular gap (7), with the lower end of the sleeve projecting farther into the interior space of the lid of the reactor pressure vessel than the connection piece and with a probe (46) equipped with an eddy current probe (48) being introduced into the annular gap and being movable therein, **characterized in that** a centering piece (16) is brought into contact with the lower end of the sleeve (5) and that the probe (46) together with the centering piece and the sleeve is made to rotate.

2. A method as claimed in claim 1, **characterized in that** the rotational movement is a pendulum movement, at the beginning or at the end of which there is a vertical movement of the probe (46) to a new testing position.

3. A method as claimed in claim 1 or 2, **characterized in that** there is a continual vertical movement of the probe (46) during the rotational movement.

4. A method for non-destructive testing of a lead-through arranged as a welded connection piece (3) of the lid (2) of a reactor pressure vessel which is placed on a parking ring (1), with the connection piece (3) being penetrated by a sleeve (5) resting on the same whilst leaving an annular gap (7), with the lower end of the sleeve projecting farther into the interior space of the lid of the reactor pressure vessel than the connection piece and with a probe (46) equipped with an eddy current probe (48) being introduced into the annular gap and being movable therein, **characterized in that** a centering piece (16) is brought into contact with the lower end of the sleeve (5) and that when the sleeve (5) remains in the idle position the annular gap (7) is moved over in a strip-like fashion in the vertical direction by the eddy current probe (48) and that after covering a strip the eddy current probe is brought to a new testing position for moving along a further strip by turning the probe (46).

5. A device for non-destructive testing of a lead-through arranged as a welded connection piece (3) of the lid (2) of a reactor pressure vessel which is placed on a parking ring (1), with the connection piece (3) being penetrated by a sleeve (5) resting on the same whilst leaving an annular gap (7), with the lower end of the sleeve projecting farther into the interior space of the lid of the reactor pressure vessel than the connection piece and with a probe (46) equipped with an eddy current probe (48) being introduced into the annular gap (7) and being movable therein, **characterized in that** a frame (11) rests on a manipulator (10) disposed within the parking ring (1), which frame carries a housing (13) for receiving a turntable (14) via fastenable floating bearings (12), that the turntable is associated in an eccentric arrangement with a vertically adjustable lifting cylinder (20) which simultaneously performs the rotational movement of the turntable and carries at its free end a probe drive (22) for moving the probe (46) in a direction parallel to the axis towards the connection piece (3), and that the turntable (14) is concentrically associated with a centering piece (16) which is adjustable in the vertical direction and which simultaneously performs the rotational movement of the turntable.

6. A device as claimed in claim 5, **characterized in that** the probe (46) consists of a spring steel strip which is provided with a perforation (47) and carries at its free end the eddy current probe (48), with a knobbed wheel (54) of the probe drive (22) engaging in the perforation (47).

7. A device as claimed in claim 5, **characterized in that** the lifting cylinder (20) is provided with a horizontally extending base part (23) to which is linked in a swivelable manner a fork element (27) and a fixing device (28) for a pneumatically controlled cylinder (29), with the piston rod (30) of the cylinder being connected with the fork element (27) and with a clamping holder (36) for receiving the probe drive (22) being fastened to an end of the fork element which is arranged in the shape of a plate.

8. A device as-claimed in claim 7, **characterized in that** a resilient supported gap (37) is provided at the fastening location of the clamping holder (36) and that a stop (43) is associated with the clamping holder (36) of the probe drive (22) and a holder (45) for a limit stop switch is associated with the fork element (27), which cause an interruption of the vertical movement of the probe (46) when falling below a predefinable gap width.

9. A device as claimed in claim 5, **characterized in that** the probe (46) consists of a spring steel strip which is provided with a perforation (47) and that a crossbeam (59) corresponding to the curvature of the annular gap (7) is fastened to the free end of the probe (46), which crossbeam receives at its free ends an eddy current probe (48a) each.

10. A device as claimed in claim 6 or 9, **characterized in that** the spring steel strip is provided with a plurality of oblong holes (49) disposed in rows, that the connecting bridges between the oblong holes are arranged in opposite directions as beads (51) with a semi-circular cross section in order to guide a transmission line (50) of the eddy current probe (48).

## Revendications

1. Procédé de contrôle non-destructif d'une traversée réalisée sous forme de manchette d'adaptation (3) soudée dans un couvercle (2) de cuve à pression de réacteur nucléaire, lequel couvercle est déposé sur une bague d'appui (1), la manchette (3) étant traversée par un manchon (5) qui est supporté par elle et laisse subsister par rapport à cette dernière une fente annulaire (7), l'extrémité inférieure du manchon faisant saillie plus profondément que la manchette dans l'espace intérieure du couvercle de cuve à pression de réacteur nucléaire, et une sonde (46) équipée d'une tête de contrôle (48) par courants de Foucault étant introduite et déplacée dans la fente annulaire (7), **caractérisé par le fait qu'**une pièce de centrage (16) est amenée en contact avec l'extrémité inférieure du manchon (5) et que la sonde (46) est animée d'un mouvement de rotation conjointement avec la pièce de centrage et le manchon.

2. Procédé suivant la revendication 1, **caractérisé par le fait que** le mouvement de rotation est un mouvement pendulaire au début ou à la fin duquel a lieu un mouvement vertical de la sonde (46) dans une nouvelle position de contrôle.

3. Procédé suivant la revendication 1 ou 2, **caractérisé par le fait qu'**un mouvement vertical continu de la sonde (46) a lieu pendant le mouvement de rotation.

4. Procédé de contrôle non-destructif d'une traversée réalisée sous forme de manchette d'adaptation (3) soudée dans un couvercle (2) de cuve à pression de réacteur nucléaire, lequel couvercle est déposé sur une bague d'appui (1), la manchette (3) étant traversée par un manchon (5) qui est supporté par elle et laisse subsister par rapport à cette dernière une fente annulaire (7), l'extrémité inférieure du manchon faisant saillie plus profondément que la manchette dans l'espace intérieure du couvercle de cuve à pression de réacteur nucléaire, et une sonde (46) équipée d'une tête de contrôle (48) par courants de Foucault étant introduite et déplacée dans la fente annulaire (7), **caractérisé par le fait qu'**une pièce de centrage (16) est amenée en contact avec l'extrémité inférieure du manchon (5) et que la fente annulaire (7) est parcourue par bandes en direction verticale par la tête de contrôle (48) par courants de Foucault, le manchon (5) restant en position de repos, et qu'après avoir parcouru une bande, la tête de contrôle par courants de Foucault est amenée, par rotation de la sonde (46), dans une nouvelle position de contrôle en vue du parcours d'une bande supplémentaire.

5. Dispositif pour le contrôle non-destructif d'une traversée réalisée sous forme de manchette (3) soudée dans un couvercle (2) de cuve à pression de réacteur nucléaire, lequel couvercle est déposé sur une bague d'appui (1), la manchette (3) étant traversée par un manchon (5) qui est supporté par elle et laisse subsister par rapport à elle une fente annulaire (7), l'extrémité inférieure du manchon faisant saillie dans l'espace intérieur du couvercle de cuve à pression de réacteur nucléaire plus profondément que la manchette, et une sonde (46) équipée d'une tête de contrôle (48) à courants de Foucault étant introduite et déplacée dans la fente annulaire (7), **caractérisé par le fait qu'**un manipulateur (10) disposé à l'intérieur de la bague d'appui (1) supporte un cadre (11) qui porte, par des paliers flottants (11) blocables, un carter (13) pour recevoir un plateau tournant (14), qu'un vérin de levage (20) réglable verticalement est associé en position excentrée au plateau tournant, vérin qui participe au mouvement de rotation du plateau tournant et porte à son extrémité libre une commande de sonde (22) pour déplacer la sonde (46) suivant une direction parallèle à l'axe de la manchette (3), et qu'une pièce de centrage (16) qui est réglable en direction verticale et qui participe au mouvement de rotation du plateau tournant (14) est associée concentriquement à ce dernier.

6. Dispositif suivant la revendication 5, **caractérisé par le fait que** la sonde (46) est constituée d'une bande d'acier à ressort qui est munie d'une perforation (47) et porte à son extrémité libre une tête de contrôle (48) par courants de Foucault, un pignon (54) de la commande de sonde (22) engrenant avec la perforation (47).

7. Dispositif suivant la revendication 5, **caractérisé par le fait que** le vérin de levage (20) présente une pièce de base (23) s'étendant horizontalement, sur laquelle une chape (27) et un support (28) pour un vérin (29) à fluide sous pression sont articulés de façon pivotante, la tige de piston (30) du vérin étant reliée à la chape (27) et un support à serrage (36) pour recevoir la commande de sonde (22) étant fixé à l'extrémité en forme de plaque de la chape.

8. Dispositif suivant la revendication 7, **caractérisé par le fait qu'**une fente (37) maintenue élastiquement est prévue à l'emplacement de fixation du support à serrage (36) et qu'une butée (43) est associée au support à serrage (36) de la commande de sonde (22) et un support d'interrupteur de fin de course (45) est associé à la chape (27) de manière à provoquer une interruption du mouvement vertical de la sonde (46) lorsque la largeur de la fente devient inférieure à une valeur prédéterminée.

9. Dispositif suivant la revendication 5, **caractérisé par le fait que** la sonde (46) est constituée par une bande en acier à ressort qui est munie d'une perforation (47) et qu'à l'extrémité libre de la sonde (46) est fixé un support transversal (59) qui correspond à la courbure de la fente annulaire (7) et reçoit une tête de contrôle (48a) par courants de Foucault à chacune de ses extrémités libres.

10. Dispositif suivant la revendication 6 ou 9, **caractérisé par le fait que** la bande en acier à ressort est munie d'une multitude de trous oblongs (49) disposés en une rangée, que les parties entre les trous oblongs sont conformées, en sens opposés, en moulures (51) de section demi-circulaire pour le guidage d'une ligne de transmission (50) de la tête de contrôle (48) par courants de Foucault.
